# EUROPÄISCHE PATENTANMELDUNG

(11) **EP 3 819 512 A1**
(43) Veröffentlichungstag der Anmeldung: **12.05.2021**
(21) Anmeldenummer: 19207714.7
(22) Anmeldetag: 07.11.2019
(51) Int. Cl.: F16C 29/00, F16C 29/04, F16C 29/12

(54) **LAUFSCHLITTENTRANSPORTEINRICHTUNG**

(71) Anmelder: AyTec Automation GmbH, 93098 Mintraching (DE); BMW AG, 80809 München (DE)
(72) Erfinder: RUHLAND, Christian, 93161 Sinzing (DE); SCHMIDBAUER, Josef, 80809 München (DE)
(74) Vertreter: Glück Kritzenberger Patentanwälte PartGmbB

(57) **Zusammenfassung**

Die Erfindung betrifft eine Laufschlittentransporteinrichtung, umfassend,
einen aufgeständerten frei tragenden Stahlunterbau (46) und/oder einen frei tragend
aufgehängten Stahlüberbau (14) mit einer daran getragenen Führungsanordnung, umfassend eine erste Führungseinrichtung (17) mit einer ersten Führungsschiene (18) mit zwei gegensinnig und relativ zur Vertikalen geneigten und geneigten ersten Führungsflächen (22a,b),
und
eine zweite Führungseinrichtung (19) mit einer zweiten Führungsschiene (20) mit einer zumindest weitgehend horizontalen zweiten Führungsfläche (24),
mit wenigstens einem Laufwagen (26), der
- zwei voneinander beabstandete erste Führungsrollenanordnungen (32) aufweist, die zum Laufen auf der ersten Führungsschiene (18) konzipiert sind, wobei die ersten Führungsrollenanordnungen (32) Bestandteil der ersten Führungseinrichtung (17) sind und wenigstens eine erste Führungsrolle (34) für jede der beiden ersten Führungsflächen (22a,b) aufweisen, und
- eine zweite Führungsrollenanordnung (38) aufweist, die Bestandteil der zweiten Führungseinrichtung (19) ist, und die an einem Punkt (36) an dem Laufwagen (26) befestigt ist, welche zweite Führungsrollenanordnung (38) mindestens eine zweite Führungsrolle (40) zum Laufen auf der zweiten Führungsfläche (24) aufweist,

wobei die beiden ersten Führungsrollenanordnungen (32) einerseits und die zweite Führungsrollenanordnung (38) andererseits quer zur Laufrichtung (x) des Laufwagens (26) voneinander beabstandet an dem Laufwagen (26) befestigt sind.

## Beschreibung

Die vorliegende Laufschlittentransporteinrichtung bezieht sich auf ein Grundsystem, bei welchem die Führungsschienen der Laufschlittentransporteinrichtung entweder auf einem Stahlunterbau aufgeständert sind oder an einem Stahlüberbau aufgehängt sind. Was beiden Systemen gemeinsam ist, ist die Verwendung eines Stahlbaus als Mittler zwischen der Aufhängung der Führungsschiene und einem Element eines Gewerbebaus, wie zum Beispiel einem Boden oder einer Decke oder Träger. So sind die Führungsschienen aufgrund des Stahlbaus an einer elastischen Stahlkonstruktion getragen, die Schwingungen des Gebäudes aufnimmt, die aufgrund der Wärmeausdehnung der Stahlkonstruktion eine gewisse Variation in den Abmessungen hat, und die zudem eine gewisse Welligkeit aufgrund des Durchhängens zwischen den Aufhängungs- oder Abstützungspunkten des Stahlbaus am Gebäude zeigt.

Es ist Aufgabe der Erfindung, eine Laufschlittentransporteinrichtung zu schaffen, die gegen diese mit der Zwischenschaltung eines Stahlbaus, sei es ein Stahlüberbau oder ein Stahlunterbau, verbundenen Probleme unempfindlich ist, und die eine exakte präzise Führung eines Laufschlittens auf den Führungsschienen der Laufschlittentransporteinrichtung gewährleistet.

Diese Aufgabe wird durch eine Laufschlittentransporteinrichtung mit den Merkmalen des Anspruchs 1 gelöst. Vorteilhafte Weiterbildungen der Erfindung sind Gegenstand der abhängigen Ansprüche. Die erfindungsgemäße Laufschlittentransporteinrichtung enthält einen aufgeständerten frei tragenden Stahlunterbau und/oder einen frei tragend aufgehängten Stahlüberbau, eine an dem Stahlunterbau und/oder an dem Stahlüberbau getragene Führungsanordnung. Die Führungsanordnung umfasst eine erste Führungseinrichtung mit einer ersten Führungsschiene, die zwei relativ zur Vertikalen gegensinnig geneigte erste Führungsflächen aufweist. Die Führungsanordnung enthält weiterhin eine zweite Führungseinrichtung mit einer zweiten Führungsschiene, die eine zumindest weitgehend horizontale zweite Führungsfläche aufweist.

Die Führungsanordnung umfasst weiterhin wenigstens einen Laufwagen, der zwei der ersten Führungseinrichtung zugehörige voneinander beabstandete erste Führungsrollenanordnungen aufweist, die zum Laufen auf der ersten Führungsschiene konzipiert sind. Jede der ersten Führungsrollenanordnungen enthält hierbei wenigstens eine Rolle für jede der beiden ersten Führungsflächen der ersten Führungsschiene. Weiterhin weist der Laufwagen eine der zweiten Führungseinrichtung zugehörige zweite Führungsrollenanordnung auf, die an einem Punkt oder Drehpunkt an dem Laufwagen befestigt ist. Die zweite Führungsrollenanordnung weist mindestens eine Rolle zum Laufen auf der zweiten Führungsfläche auf.

Die beiden ersten Führungsrollenanordnungen der ersten Führungseinrichtung einerseits und die zweite Führungsrollenanordnung der zweiten Führungseinrichtung andererseits sind quer zur Laufrichtung des Laufwagens voneinander beabstandet an dem Laufwagen befestigt.

Durch seine relativ zur Vertikalen und gegensinnig geneigten ersten Führungsflächen bildet die erste Führungseinrichtung, d.d. die erste Führungsschiene zusammen mit den ersten Führungsrollenanordnungen in der Horizontalen quer zur Bewegungsrichtung des Laufwagens ein Festlager, während die zweite Führungseinrichtung, d.h. die zweite Führungsschiene mit ihrer weitgehend horizontalen zweiten Führungsfläche in Verbindung mit der zweiten Führungsrollenanordnung ein Loslager horizontal quer zur Bewegungsrichtung bildet.

Durch die erste Führungseinrichtung, d.h. durch die erste Führungsschiene in Verbindung mit den beiden zueinander beabstandeten ersten Führungsrollenanordnungen, ist der Laufwagen in seiner Bewegung absolut präzise geführt. Die zweite Führungseinrichtung umfassend die zweite Führungsschiene und die zweite Führungsrollenanordnung dienen hierbei lediglich zur Aufnahme des Gewichts des Laufwagens und nicht zu dessen Führung. Dadurch, dass diese zweite Führungseinrichtung ein Loslager quer zur Laufrichtung bildet, ist die gesamte Aufhängung bzw. Abstützung des Wagens unempfindlich gegen Veränderungen des Abstandes zwischen den ersten und zweiten Führungsschienen, weiterhin unempfindlich auf eine leichte Veränderung des Abstandes der ersten Führungsrollenanordnungen von der zweiten Führungsrollenanordnung, als auch unempfindlich gegen eine leichte Welligkeit, die auftritt beim Tragen Stahlbaukonstruktion an Decke, Träger oder Boden. Weiterhin sorgt die Dreipunktaufhängung des Laufwagens, nämlich zwei Tragpunkte auf der ersten Führungsschiene, die zur präzisen Orientierung des Laufwagens führen, und ein einziger Tragpunkt auf der zweiten Führungsschiene, dazu, dass nach dem Dreibeinprinzip der Laufwagen immer, unabhängig von seiner Lastbeaufschlagung und auch bei einer eventuellen Unebenheit der Führungsschienen, fest, insbesondere ohne Wackeln, auf den Führungsschienen aufliegt.

Vorzugsweise sind die ersten Führungsflächen der ersten Führungsschiene symmetrisch zur Vertikalen geneigt, so dass die auf die beiden ersten Führungsflächen einwirkenden Tragkräfte durch die ersten Führungsrollenanordnungen zumindest weitgehend ausgeglichen sind.

Es hat sich als vorteilhaft herausgestellt, wenn die ersten Führungsflächen relativ zur Vertikalen in einem Winkel von 25 bis 60 Grad, insbesondere 35 bis 60 Grad, insbesondere 45 Grad, geneigt sind. Bei Verwendung dieser Neigungswerte ist das Verhältnis zwischen Stabilität des Laufwagens quer zur Laufrichtung und Aufnahme der Tragkräfte in vertikaler Richtung am besten harmonisiert. Wenn ein Winkel von 45 Grad verwendet wird, kann beispielsweise ein geschlossenes Rechteckprofil verwendet werden, welches um 45 Grad gedreht an dem Stahlunterbau und/oder an dem Stahlüberbau befestigt wird. Dies ist technisch einfach zu realisieren.

Hingegen hat die zweite Führungsfläche vorzugsweise einen maximalen Winkel von 25 Grad, noch besser einen maximalen Winkel von 10 Grad zur Horizontalen, und ist damit in der Lage, eine relative Veränderung des Abstands zwischen erster und zweiter Führungsschiene und/oder einer Veränderung des Abstands zwischen erster Führungsrollenanordnung und zweiter Führungsrollenanordnung zum Beispiel aufgrund von thermischen Ausdehnungskoeffizienten oder einer Durchbiegung des Laufwagens aufgrund Beladung auszugleichen. Denn eine horizontale Tragfläche mit einer horizontal darauf laufenden zweiten Führungsrolle kann in der Horizontalen quer zur Laufrichtung durchaus die relative Position leicht verändern, ohne dabei die Tragfunktion zu verlieren. Der Vorteil besteht darin, dass die zweite Führungseinrichtung, d.h. die zweite Führungsschiene in Verbindung mit der zweiten Führungsrollenanordnung allein eine tragende Funktion und nicht eine führende Funktion inne hat.

Vorzugsweise sind die erste und/oder zweite Führungsrollenanordnung an einer Seitenkante des Laufwagen angeordnet bzw. montiert. Auf diese Weise sind die erste Führungsrollenanordnung und die zweite Führungsrollenanordnung an den entgegengesetzten Seiten des Laufwagens montiert, womit der dazwischen angeordnete Laufwagen eine optimale Stabilität aufweist.

In einer vorteilhaften Weiterbildung der Erfindung umfasst die zweite Führungsrollenanordnung eine sich in Laufrichtung erstreckende längliche Schwinge, die an dem Laufwagen um eine horizontale Achse quer zur Laufrichtung schwenkbar angelenkt ist, und welche Schwinge insbesondere in ihren Endbereichen jeweils wenigstens eine zweite Führungsrolle aufweist. Diese Lösung hat den Vorteil, dass die Tragkraft zwar zwischen den beiden zweiten Führungsrollen an den Enden der Schwinge aufgeteilt wird, die von den zweiten Führungsrollen 40 abgestützte Last wird jedoch nur an dem Drehlager 36 von der Schwinge 35 auf den Laufwagen übertragen. Auf diese Weise wird die Dreipunktabstützung des Laufwagens beibehalten, obwohl die zweite Führungsrollenanordnung zwei Führungsrollen an den Enden der Schwinge aufweist und damit besser in der Lage ist, größere Kräfte aufzunehmen und auf die zweite Führungsschiene zu übertragen.

Vorzugsweise ist in diesem Fall die Schwinge in dem mittleren Drittel ihrer Länge, vorzugsweise in der Mitte, an dem Laufwagen angelenkt. Dies führt zu einer optimalen Krafteinleitung zwischen Laufwagen und den beiden zweiten Führungsrollen an den Enden der Schwinge.

Vorzugsweise enthält der Laufwagen einen Metallrahmen, insbesondere Leichtmetallrahmen, an welchem die ersten Führungsrollenanordnungen und die zweite Führungsrollenanordnung montiert bzw. angelenkt sind. Ein derartiger Leichtmetallrahmen hat zum einen ein geringes Gewicht und zum anderen hat er eine ausreichende Stabilität, um Produktions- und/oder Messeinheiten daran zu befestigen.

Vorzugsweise ist die erste Führungsrollenanordnung relativ zur Zentralachse des Laufwagens in dessen Laufrichtung auf der einen Seite und die zweite Führungsrollenanordnung auf der anderen Seite angeordnet, so dass der Masseschwerpunkt des Laufwagens sich vorzugsweise zwischen der ersten und zweiten Führungsschiene befindet und der Laufwagen somit eine hohe Stabilität aufweist.

Vorzugsweise ist der Stahlunterbau/Überbau in einem Abstand von 1 bis 5 m zum Boden/zur Decke aufgeständert/abgehängt. Die Laufschlittentransporteinrichtung ist damit in der Lage, in größeren Abständen an einer Decke oder einem Träger aufgehängt zu werden bzw. auf dem Boden einer Halle oder eines Arbeitsuntergrundes.

Es ist für den Fachmann offensichtlich, dass die oben beschriebenen Ausführungsbeispiele der Erfindung in beliebiger Weise miteinander kombiniert werden können.

Die Erfindung wird nachfolgend beispielsweise anhand der schematischen Zeichnung beschrieben. In dieser zeigen:
- Fig. 1: eine Seitenansicht auf eine erste Führungsschiene, die an einem Stahlüberbau getragen ist,
- Fig. 2: eine perspektivische Darstellung einer an einem Stahlüberbau getragenen Anordnung von ersten und zweiten Führungsschienen inkl. eines darauf laufenden Laufwagens,
- Fig. 3: eine perspektivische Ansicht gemäß Fig. 2, die in ihrer Ansicht leicht verschwenkt ist,
- Fig. 4: eine Frontansicht auf die Aufhängungen der Führungsschienen an dem Stahlüberbau inkl. des darauf laufenden Laufwagens,
- Fig. 5: eine weitere Ausführungsform einer auf einem Stahlunterbau aufgeständerten Laufschlittenanordnung, und
- Fig. 6: eine Frontansicht der auf dem Stahlüberbau getragenen ersten und zweiten Führungsschiene inkl. des Laufwagens.

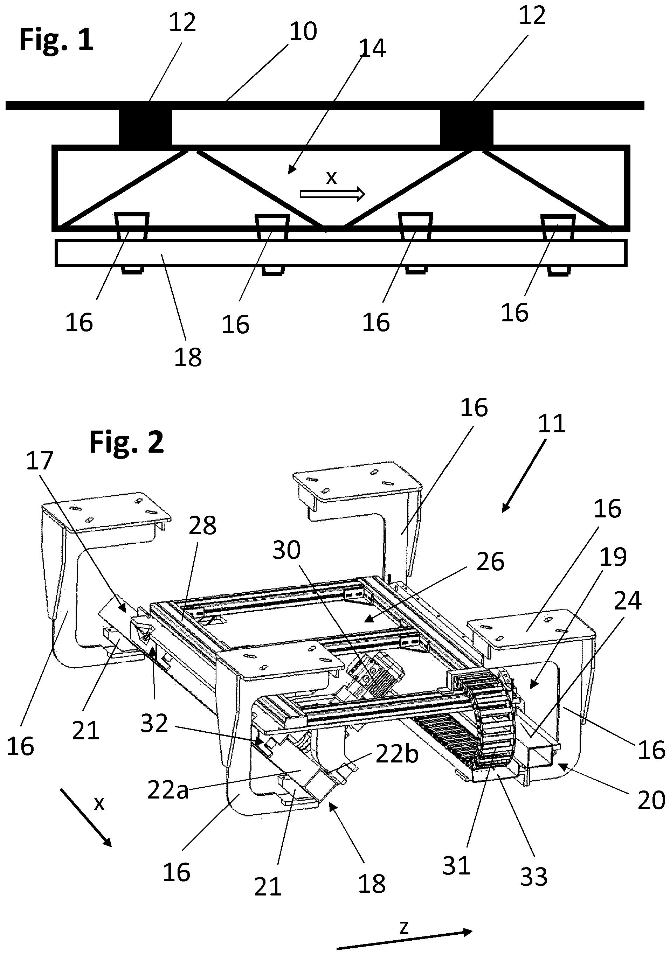

Fig. 1 zeigt eine Decke 10 eines Gebäudes, an welchem über Träger 12 eine Stahlkonstruktion in Form eines Stahlüberbaus 14 aufgehängt ist. Dieser Stahlüberbau 14 ist beispielsweise als Gitterkonstruktion ausgebildet und damit sehr starr und stabil, kann jedoch auch durch einen oder mehrere offene oder geschlossene Stahlträger oder Stahlprofile gebildet sein. An der Unterseite des Stahlüberbaus 14 sind C-förmige Tragarme 16 getragen, deren Oberseite an dem Stahlüberbau 14 befestigt ist und deren Unterseite eine erste Führungsschiene 18 als auch eine zweite Führungsschiene 20 (Fig. 2) tragen. Die erste Führungsschiene 18 ist über ein Montageprofil 21 an dem Tragarm 16 gehalten, welches Montageprofil 21 die 45 Grad-Drehung des quadratischen Stahlprofils der ersten Führungsschiene 18 realisiert.

In Fig. 2 sind diese Führungsschienen und eine darauf geführter Laufwagen 26 perspektivisch dargestellt. Aus Gründen der Klarheit ist der Stahlüberbau 14 hier nicht gezeigt, sondern nur die Tragarme 16. Die erste Führungsschiene 18 besteht aus einem Rechteckprofil mit einem quadratischen Querschnitt, welches um 45 Grad geneigt gehalten ist, so dass jeweils die Ecken des Profils nach oben/unten und horizontal zur Seite zeigen. Die beiden nach oben weisenden Flächen der ersten Führungsschiene 18 bilden zwei erste Führungsflächen 22a, 22b, die gegensinnig und jeweils um 45 Grad zur Vertikalen geneigt sind.

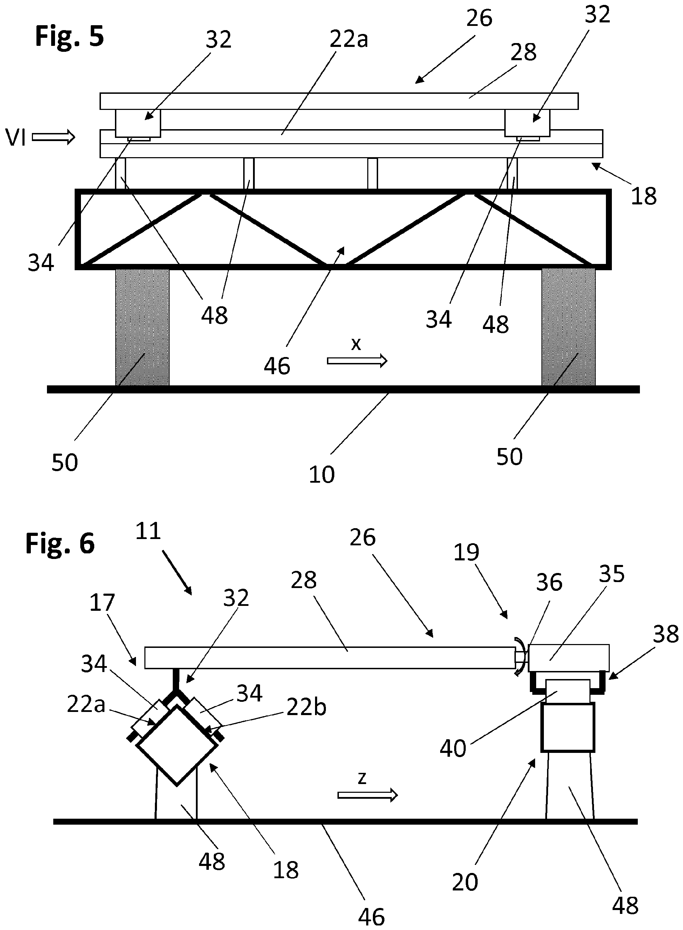

Die zweite Führungsschiene 20 besteht ebenfalls aus einem rechteckigen Profil, dessen Oberseite eine zweite horizontale Führungsfläche 24 bildet. Auf den beiden Führungsschienen 18, 20 ist ein Laufwagen 26 getragen, der ein Leichtmetallchassis 28 aufweist, an welchem ein Antriebsmotor 30 befestigt ist. Der Laufwagen 26 weist oberhalb der ersten Führungsschiene 18 an der Vorder- und Hinterseite jeweils eine erste Führungsrollenanordnung 32 auf, die jeweils erste Führungsrollen 34 aufweisen, die auf den beiden ersten Führungsflächen 22a, 22b der ersten Führungsschiene 18 laufen. Oberhalb der zweiten Führungsschiene 20 ist an dem Laufwagen 26 eine in Laufrichtung verlaufende Schwinge 35 über ein mittleres horizontales Drehlager 36 an dem Leichtmetallchassis 28 des Laufwagens 26 angelenkt (Siehe Fig. 6). An den beiden Enden der Schwinge 35 ist jeweils eine zweite Führungsrollenanordnung 38 mit jeweils wenigstens einer zweiten Führungsrolle 40 gehalten, welche auf der zweiten Führungsfläche 24 läuft, die auf der Oberseite der zweiten Führungsschiene 20 gebildet ist. Die erste Führungsschiene 18 mit den ersten Führungsrollenanordnungen 32 bilden eine erste Führungsanordnung 17, welche den Laufwagen 26 auf einer Seite trägt. Die andere Seite des Laufwagens 26 wird durch eine zweite Führungsanordnung 19 getragen, die durch die zweite Führungsschiene 20, die zweiten Führungsrollenanordnung 38, die Schwinge 35 und dem Drehlager 36 gebildet ist.

In der horizontalen Richtung Z quer zur Laufrichtung X des Laufwagens bildet somit die erste Führungsanordnung 17 ein Festlager, während die zweiten Führungsanordnung 19 in dieser Richtung ein Loslager bildet. Der Laufwagen wird an drei Punkten auf den beiden Führungsschienen 18, 20 getragen, nämlich an zwei Punkten auf der ersten Führungsschiene 18, nämlich über die vorderen und hinteren ersten Führungsrollenanordnungen 32, und an einem Punkt im Bereich der zweiten Führungsschiene 20, nämlich über das an dem Laufwagen 26 angeordnete Drehlager 36 der Schwinge 35.

Unabhängig von einer eventuellen Welligkeit oder eines leichten vertikalen oder horizontalen Versatzes oder Durchbiegungen der Führungsschienen 18, 20 läuft somit der Laufwagen 26 aufgrund der Dreipunktabstützung immer fest auf den beiden Führungsschienen 18, 20. Aufgrund der beiden voneinander beabstandeten ersten Führungsrollenanordnungen 32 läuft er dabei in einer exakten Ausrichtung in Laufrichtung X. Durch die Kombination von Festlager und Loslager der beiden Führungsanordnungen 17, 19 bleibt der Laufwagen in Z-Richtung ausgehend von der ersten Führungsschiene 18 immer exakt in Position.

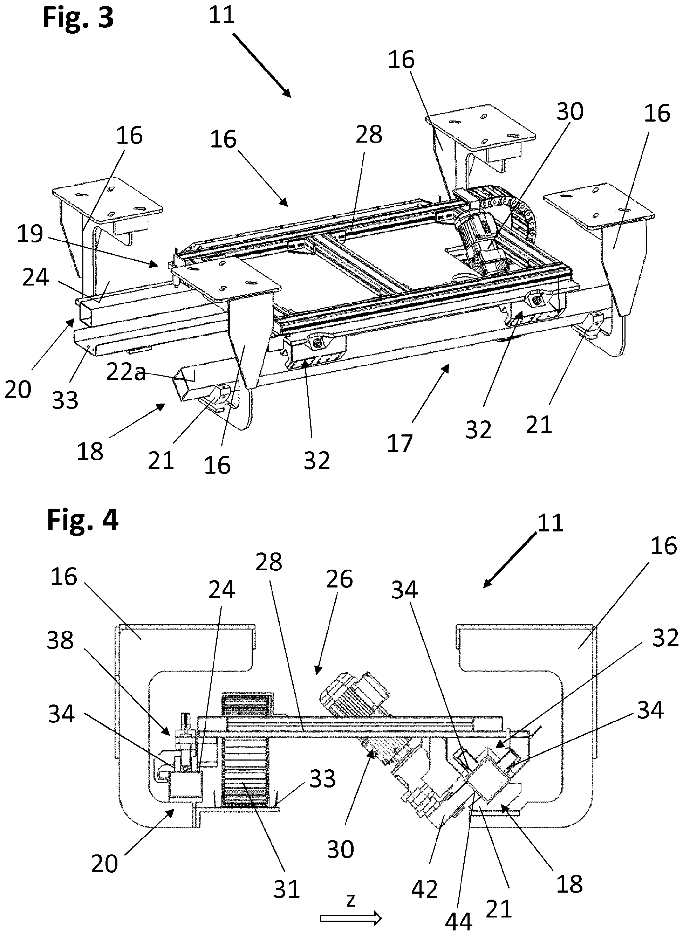

Der Motor 30 hat, wie in Fig. 4 zu sehen ist, an seiner Vorderseite ein Reibrad 42, welches eine nach unten weisende Reibfläche 44 der ersten Führungsschiene 18 kämmt, das heißt in Friktionseingriff tritt. Statt einem Friktionseingriff kann die entsprechende Fläche der ersten Führungsschiene auch geriffelt sein und mit einem Zahnrad in Wechselwirkung treten, welches an der Motorwelle angetrieben ist. Auf diese Weise wird ein präziser Antrieb des Laufwagens 26 auf den beiden Führungsschienen 18, 20 realisiert.

Die gesamte elektrische Versorgung und der Datenaustausch mit dem Laufwagen 26 erfolgt über ein Versorgungs- und Datenkabel 31, welches in einer Führungswanne 33 geführt ist und dort abrollen kann, ohne die Bewegung des Laufwagens 26 auf den Führungsschienen 18, 20 zu beeinträchtigen.

Die Fig. 5 und 6 zeigen eine weitere Ausbildungsform der Erfindung, in welchem die aus den Fig. 1 bis 4 bekannte Anordnung von erster und zweiter Führungsschiene 18, 20 auf einem Stahlunterbau 46 mittels Abstützungen 48 getragen sind, wobei der Stahlunterbau 46 wiederum beispielsweise aus einer Metallgitterkonstruktion bestehen kann, die auf Bodenträgern 50 auf dem Boden einer Halle oder eines Gewerbegebietes abgestützt ist. Die ersten und zweiten Führungsrollenanordnungen 32, 38 sind in Fig. 5 und 6 in stark vereinfachter schematisierter Darstellung gezeigt.

Die Erfindung ist nicht auf die oben beschriebenen Ausführungsbeispiele begrenzt, sondern kann innerhalb des Schutzbereichs der nachfolgenden Ansprüche beliebig variiert werden.

### Bezugszeichenliste:

- 10: Decke/Boden
- 11: Laufschlittenanordnung
- 12: Träger
- 14: Stahlüberbau - Stahlgitterkonstruktion
- 16: Tragarme
- 17: erste Führungseinrichtung
- 18: erste Führungsschiene - Stahlrechteckprofil mit quadratischem Querschnitt
- 19: zweite Führungseinrichtung
- 20: zweite Führungsschiene - Rechteckprofil
- 21: Montageprofil zur Befestigung der ersten Führungsschiene an den Tragarmen
- 22a,b: erste Führungsflächen auf der ersten Führungsschiene
- 24: zweite Führungsfläche
- 26: Laufwagen
- 28: Leichtmetallchassis des Laufwagens
- 30: Antriebsmotor
- 31: Versorgungs- und Datenkabel
- 32: erste Führungsrollenanordnung
- 33: Führungsschale für Versorgungs-und Datenkabel
- 34: erste Führungsrollen
- 35: Schwinge der zweiten Führungsrollenanordnung
- 36: Drehlager der Schwinge am Laufwagen
- 38: zweite Führungsrollenanordnung
- 40: zweite Führungsrollen
- 42: Reibrad des Antriebsmotors
- 44: Reibfläche an der ersten Führungsschiene
- 46: Stahlunterbau
- 48: Abstützungen der Führungsschiene auf dem Stahlunterbau
- 50: Bodenträger zum Abstützen des Stahlunterbaus auf einem Boden

## Patentansprüche

1. Laufschlittentransporteinrichtung, umfassend,
einen aufgeständerten frei tragenden Stahlunterbau (46) und/oder einen frei tragend aufgehängten Stahlüberbau (14),
eine an dem Stahlunterbau (46) und/oder an dem Stahlüberbau (14) getragene Führungsanordnung, umfassend
eine erste Führungseinrichtung (17) mit einer ersten Führungsschiene (18) mit zwei gegensinnig und relativ zur Vertikalen geneigten und geneigten ersten Führungsflächen (22a,b),
und
eine zweite Führungseinrichtung (19) mit einer zweiten Führungsschiene (20) mit einer zumindest weitgehend horizontalen zweiten Führungsfläche (24),
mit wenigstens einem Laufwagen (26), der
- zwei voneinander beabstandete erste Führungsrollenanordnungen (32) aufweist, die zum Laufen auf der ersten Führungsschiene (18) konzipiert sind, wobei die ersten Führungsrollenanordnungen (32) Bestandteil der ersten Führungseinrichtung (17) sind und wenigstens eine erste Führungsrolle (34) für jede der beiden ersten Führungsflächen (22a,b) aufweisen, und
- eine zweite Führungsrollenanordnung (38) aufweist, die Bestandteil der zweiten Führungseinrichtung (19) ist, und die an einem Punkt (36) an dem Laufwagen (26) befestigt ist, welche zweite Führungsrollenanordnung (38) mindestens eine zweite Führungsrolle (40) zum Laufen auf der zweiten Führungsfläche (24) aufweist,
wobei die beiden ersten Führungsrollenanordnungen (32) einerseits und die zweite Führungsrollenanordnung (38) andererseits quer zur Laufrichtung (x) des Laufwagens (26) voneinander beabstandet an dem Laufwagen (26) befestigt sind.

2. Laufschlittenanordnung nach Anspruch 1, **dadurch gekennzeichnet, dass** die erste Führungseinrichtung (17) horizontal quer zur Bewegungsrichtung des Laufwagens (26) ein Festlager bilden und die zweite Führungseinrichtung (19) ein Loslager.

3. Laufschlittenanordnung nach Anspruch 1 oder 2, **dadurch gekennzeichnet, dass** die ersten Führungsflächen (22a,b) symmetrisch zur Vertikalen geneigt sind.

4. Laufschlittenanordnung nach einem der vorhergehenden Ansprüche, **dadurch gekennzeichnet, dass** die ersten Führungsflächen (22a,b) zur Vertikalen in einem Winkel von 25 bis 60 Grad, insbesondere 35 bis 60 Grad geneigt sind.

5. Laufschlittenanordnung nach einem der vorhergehenden Ansprüche, **dadurch gekennzeichnet, dass** die zweite Führungsfläche (24) in einem maximalen Winkel von 25 Grad, vorzugsweise in einem maximalen Winkel von 10 Grad zur Horizontalen geneigt ist, vorzugsweise horizontal verläuft.

6. Laufschlittenanordnung nach einem der vorhergehenden Ansprüche, **dadurch gekennzeichnet, dass** die erste und/oder zweite Führungsrollenanordnung (32, 38) an einer Seitenkante des Laufwagens (26) angeordnet ist/sind.

7. Laufschlittenanordnung nach einem der vorhergehenden Ansprüche, **dadurch gekennzeichnet, dass** die zweite Führungsrollenanordnung (38) eine sich in Laufrichtung (x) erstreckende längliche Schwinge (35) umfasst, die an dem Laufwagen (26) um eine horizontale Achse (36) quer zur Laufrichtung schwenkbar angelenkt ist, und welche Schwinge (35) in ihren Endbereichen jeweils wenigstens eine zweite Führungsrolle (40) aufweist.

8. Laufschlittenanordnung nach Anspruch 7, **dadurch gekennzeichnet, dass** die Schwinge (35) in dem mittleren Drittel ihrer Länge, vorzugsweise in der Mitte, an dem Laufwagen (26) angelenkt ist.

9. Laufschlittenanordnung nach einem der vorhergehenden Ansprüche, **dadurch gekennzeichnet, dass** der Stahlunterbau (46)/überbau (14) in einem Abstand von 1 m bis 5 m zum Boden (52)/zur Decke (10) aufgeständert/abgehängtist.

10. Laufschlittenanordnung nach einem der vorhergehenden Ansprüche, **dadurch gekennzeichnet, dass** der Laufwagen (26) einen Metallrahmen (28), insbesondere Leichtmetallrahmen aufweist, an welchem die Führungsrollenanordnungen (32, 38) montiert/angelenkt sind.

11. Laufschlittenanordnung nach einem der vorhergehenden Ansprüche, **dadurch gekennzeichnet, dass** die die ersten Führungsrollenanordnungen (32) relativ zur Zentralachse des Laufwagens (26) in dessen Laufrichtung auf der einen Seite und die zweite Führungsrollenanordnung (38) auf der anderen Seite angeordnet sind.

12. Laufschlittenanordnung nach einem der vorhergehenden Ansprüche, **dadurch gekennzeichnet, dass** der Laufwagen (26) einen gesteuerten Motor (30) mit einem Antriebsrad (42) hat, dass mit einer Antriebsgegenfläche (44) in Wechselwirkung tritt, die mit dem Stahlunterbau (46)/überbau (14) verbunden ist.

13. Laufschlittenanordnung nach Anspruch 12, **dadurch gekennzeichnet, dass** die Gegenfläche (44) an der ersten und/oder zweiten Führungsschiene (18, 20) ausgebildet ist.
